# EUROPEAN PATENT APPLICATION

(11) **EP 2 677 412 A1**
(43) Date of publication of application: **25.12.2013**
(21) Application number: 13171885.0
(22) Date of filing: 13.06.2013
(51) Int. Cl.: G06F 3/0488

(54) **Apparatus and method for controlling mode switch**

(30) Priority: 18.06.2012 KR 20120064858
(71) Applicant: Samsung Electronics Co., Ltd, Gyeonggi-do 443-742 (KR)
(72) Inventor: Jang, Ki-Tae, 443-742 Gyeonggi-do (KR)
(74) Representative: Nederlandsch Octrooibureau

(57) **Abstract**

There is provided an apparatus and method for controlling mode switching in a terminal. A switch unit outputs a signal for mode switching of the terminal in response to a touch operation of a stylus pen, and a controller switches a mode of the terminal in response to the signal output from the switch unit.

## Description

### TECHNICAL FIELD OF THE INVENTION

The present disclosure relates generally to an apparatus and method for controlling mode switching, and more particularly, to a mode switching control apparatus and method for allowing a user to conveniently switch a mode of a terminal using a stylus pen.

### BACKGROUND OF THE INVENTION

For a terminal equipped with a touch screen unit on which a user can input information with a stylus pen, while the terminal is in a sleep mode, its user may switch the terminal to a wake-up mode by generally pushing a Hold key or a Home key.

When used as an E-book for schools, the terminal may frequently switch to the sleep mode, and then the user needs to annoyingly push the Hold key or the Home key to switch the terminal to the wake-up mode, whenever he/she wants.

The touch screen unit of the terminal may employ a Touch Screen Panel (TSP) including a plurality of sensor panels.

As for the terminal which has the touch screen unit employing the TSP including a plurality of sensor panels, when the plurality of sensor panels are in operation at the same time, an input operation through a specific sensor panel may be interfered with by the other sensor panel(s).

For example, assuming that the TSP includes a capacitive sensor panel and an electromagnetic induction sensor panel, if an input is received through the capacitive sensor panel while the electromagnetic induction sensor panel is in operation, the input through the capacitive sensor panel may be interfered with by the electromagnetic induction sensor panel in operation, so a user may need to correct and retry the input inconveniently.

### SUMMARY OF THE INVENTION

To address the above-discussed deficiencies of the prior art, it is a primary object to provide a mode switching control apparatus and method for allowing a user to conveniently switch a mode of a terminal using a stylus pen.

Another aspect of an exemplary embodiment of the present disclosure is to provide a mode switching control apparatus and method for allowing a user to switch a mode of a terminal only with a stylus pen.

Another aspect of an exemplary embodiment of the present disclosure is to provide a mode switching control apparatus and method capable of individually turning on/off each sensor panel in a terminal having a touch screen unit including a plurality of sensor panels.

In accordance with one aspect of the present disclosure, there is provided an apparatus for controlling mode switching in a terminal. The apparatus includes a switch unit for outputting a signal for mode switching of the terminal in response to a touch operation of a stylus pen; and a controller for switching a mode of the terminal in response to the signal output from the switch unit.

In accordance with another aspect of the present disclosure, there is provided a method for controlling mode switching in a terminal. The method includes determining whether a switch unit outputs a signal in response to a touch operation of a stylus pen; and switching a mode of the terminal, if the switch unit outputs a signal.

Before undertaking the DETAILED DESCRIPTION OF THE INVENTION below, it can be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, can mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device can be implemented in hardware, firmware or software, or some combination of at least two of the same. It should be noted that the functionality associated with any particular controller can be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram of a terminal according to one embodiment of the present disclosure;
FIGs. 2A to 2B illustrate flowcharts describing a method for controlling mode switch in a terminal according to one embodiment of the present disclosure;
FIGs. 3A to 3C illustrate the method for controlling mode switch in a terminal according to one embodiment of the present disclosure; and
FIG. 4 illustrates a plurality of setting menus contained in a popup window according to one embodiment of the present disclosure.

Throughout the drawings, the same drawing reference numerals will be understood to refer to the same elements, features and structures.

### DETAILED DESCRIPTION OF THE INVENTION

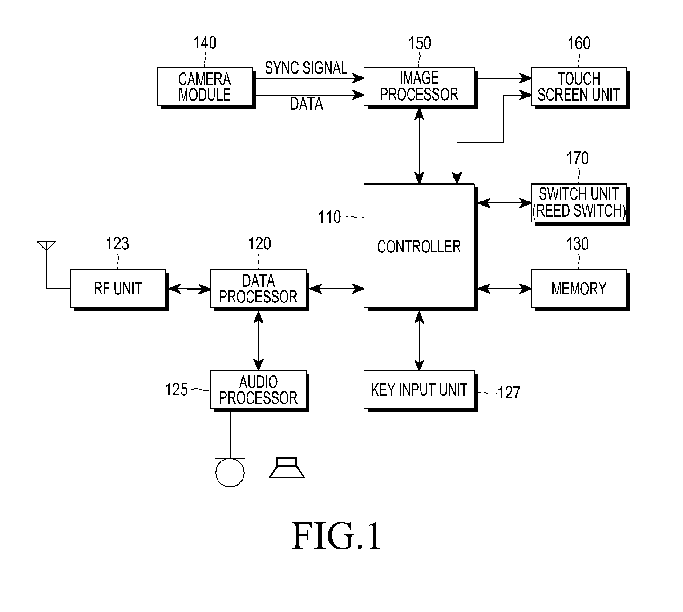

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure can be implemented in any suitably arranged electronic device. Exemplary embodiments of the present disclosure will now be described in detail with reference to the accompanying drawings. Like reference numerals in the drawings denote like elements.

Terminals, to which exemplary embodiments of the present disclosure are applicable, includes portable terminals and fixed terminals. The portable terminals, easy-to-carry mobile electronic devices, may include videophones, mobile phones, smart phones, International Mobile Telecommunication-2000 (IMT-2000) terminals, Wideband Code Division Multiple Access (WCDMA) terminals, Universal Mobile Telecommunications System (UMTS) terminals, Personal Digital Assistants (PDAs), Portable Multimedia Players (PMPs), Digital Multimedia Broadcasting (DMB) terminals, e-Books, portable computers (e.g., laptop computers and tablet Personal Computers (PCs)), or digital cameras. The fixed terminals can be desktop PCs and the like.

FIG. 1 illustrates a block diagram of a terminal according to one embodiment of the present disclosure. A Radio Frequency (RF) unit 123 is responsible for wireless communication of the terminal. The RF unit 123 includes an RF transmitter for up-converting a frequency of transmission signals and amplifying the up-converted transmission signals, and an RF receiver for low-noise-amplifying received signals and down-converting a frequency of the amplified received signals. A data processor 120 includes a transmitter for coding and modulating the transmission signals, and a receiver for demodulating and decoding the received signals. In other words, the data processor 120 can include a modulator/demodulator (modem) and a coder/decoder (codec). The codec includes a data codec for processing data signals such as packet data, and an audio codec for processing audio signals such as voice. An audio processor 125 plays received audio signals output from the audio codec in the data processor 120 using a speaker, and transfers transmission audio signals picked up by a microphone to the audio codec in the data processor 120.

A key input unit 127 includes alphanumeric keys for inputting alphanumeric information, and function keys for setting various functions.

A memory 130 can include a program memory and a data memory. The program memory can store programs for controlling a general operation of the terminal, and programs for switching a mode of the terminal in response to a touch operation of a stylus pen, which occurs in a switch unit 170, and individually turning on/off each sensor panel included in a touch screen unit 160, according to an embodiment of the present invention. The data memory can temporarily store the data generated while the programs are executed.

A controller 110 controls the overall operation of the terminal.

In accordance with one embodiment of the present disclosure, the controller 110 switches a mode of the terminal in response to a signal output from the switch unit 170.

The controller 110 can switch the terminal to a wake-up mode when the switch unit 170 outputs a signal in response to a touch operation of the stylus pen, which occurs in the switch unit 170, during a sleep mode of the terminal.

The controller 110 can display a menu for disabling at least one of a plurality of sensor panels included in the touch screen unit 160 when the switch unit 170 outputs a signal in response to a touch operation of the stylus pen, which occurs in the switch unit 170, during the wake-up mode of the terminal.

That is, the controller 110 displays a popup window in which types of the plurality of sensor panels included in the touch screen unit 160 are displayed, and when a user selects at least one sensor panel in the popup window, the controller 110 disables the at least one selected sensor panel or ignores an output from the at least one selected sensor panel.

The controller 110 can perform a function corresponding to a type of a signal output from the switch unit 170 when the switch unit 170 outputs the signal in response to a touch operation of the stylus pen during the wake-up mode of the terminal.

That is, the controller 110 displays a popup window including a plurality of setting menus when the switch unit 170 outputs a signal indicating the occurrence of a first type touch, and if the user selects any one of the plurality of setting menus contained in the popup window, the controller 110 performs a function corresponding to the selected setting menu.

The plurality of setting menus contained in the popup window can be selected by the user in many various ways. In one embodiment of the present disclosure, the popup window can include a menu for disabling at least one of the plurality of sensor panels included in the touch screen unit 160, a menu for prohibiting switching to the sleep mode, a menu for switching to the sleep mode, a menu for switching to a mute mode, a menu for switching to a configuration setting mode, and a shortcut menu for switching to a mode corresponding to a signature pattern. The controller 110 can switch the terminal to the sleep mode when the switch unit 170 outputs a signal indicating the occurrence of a second type touch. The controller 110 can perform a function defined by a user when the switch unit 170 outputs a signal indicating the occurrence of a third type touch. The function defined by a user can include a function of switching to any one menu predefined by a user from among the plurality of setting menus contained in the popup window.

Each of the first to third type touches can be any one of a single touch, a double touch, and a long touch. A long touch is a touch which is continued for equal to or more than a predetermined time.

A camera module 140 includes a camera sensor for capturing image data and converting captured optical image signals into electrical image signals, and a signal processor for converting analog image signals captured by the camera sensor into digital image data. The camera sensor can be a Charge-Coupled Device (CCD) or Complementary Metal-Oxide Semiconductor (CMOS) sensor, and the signal processor can be implemented with a Digital Signal Processor (DSP). The camera sensor and the signal processor can be implemented integrally or separately.

An image processor 150 performs Image Signal Processing (ISP) to display the image signals output from the camera module 140 on the touch screen unit 160. The ISP can include functions such as gamma correction, interpolation, spatial variation, image effecting, image scaling, Auto White Balance (AWB), Auto Exposure (AE), Auto Focus (AF) and the like. The image processor 150 processes the image signals output from the camera module 140 on a frame-by-frame basis, and outputs the frame image data according to the characteristic and size of the touch screen unit 160. The image processor 150 having a video codec compresses frame image data displayed on the touch screen unit 160 using a predetermined coding scheme, and decompresses or restores the compressed frame image data to its original frame image data. The video codec can be a Joint Photographic Experts Group (JPEG) codec, a Moving Picture Experts Group 4 (MPEG4) codec, Wavelet codec and the like. When supporting the On Screen Display (OSD) feature, the image processor 150 can output OSD data according to the size of the displayed screen under control of the controller 110.

The touch screen unit 160 can operate as an input unit or a display unit. When operating as a display unit, the touch screen unit 160 can display on a screen image signals output from the image processor 150 and user data output from the controller 110. When operating as an input unit, the touch screen unit 160 can display the same keys as those of the key input unit 127.

The touch screen unit 160 can have a Touch Screen Panel (TSP) including a plurality of sensor panels which can be classified into a capacitive sensor panel, an electromagnetic induction sensor panel capable of detecting a fine input like a stylus pen, a resistive sensor panel and a sensor panel capable of detecting the temperature and the like.

The switch unit 170 outputs a signal for mode switching of the terminal in response to a touch operation of a stylus pen. The switch unit 170 can be mounted on either a front or a side of the terminal and can include a reed switch.

When a touch operation of the magnetic stylus pen occurs in the switch unit 170, the switch unit 170 outputs an ON signal to the controller 110. In accordance with one embodiment of the present disclosure, the switch unit 170 can output various signals to the controller 110 depending on touch operations, including a single touch, a double touch, and a long touch, of the touch pen, which occur at the switch unit 170during the wake-up mode of the terminal.

Upon occurrence of a single touch by the stylus pen, the switch unit 170 outputs one ON signal to the controller 110 within a predetermined time. Upon occurrence of a double touch by the stylus pen, the switch unit 170 outputs two ON signals to the controller 110 within a predetermined time. Upon occurrence of a long touch by the stylus pen, the switch unit 170 outputs a continuous ON signal to the controller 110 for equal to or more than a predetermined time.

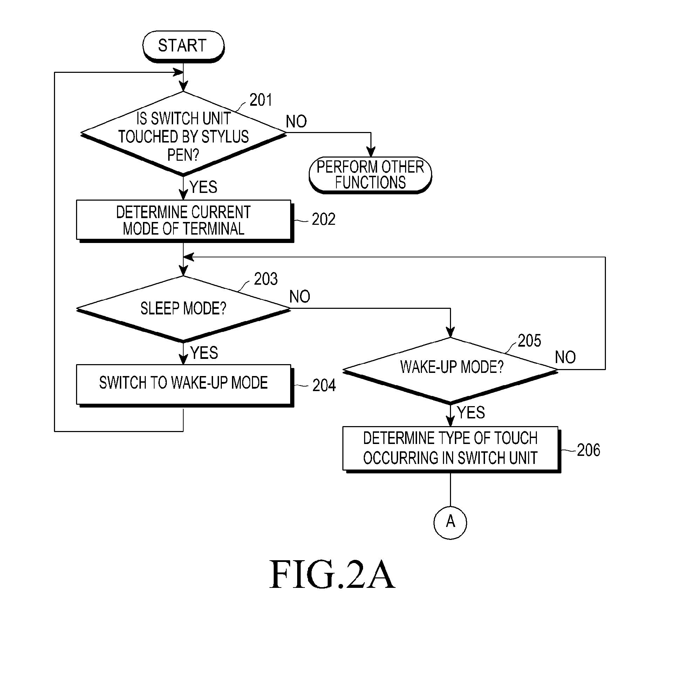

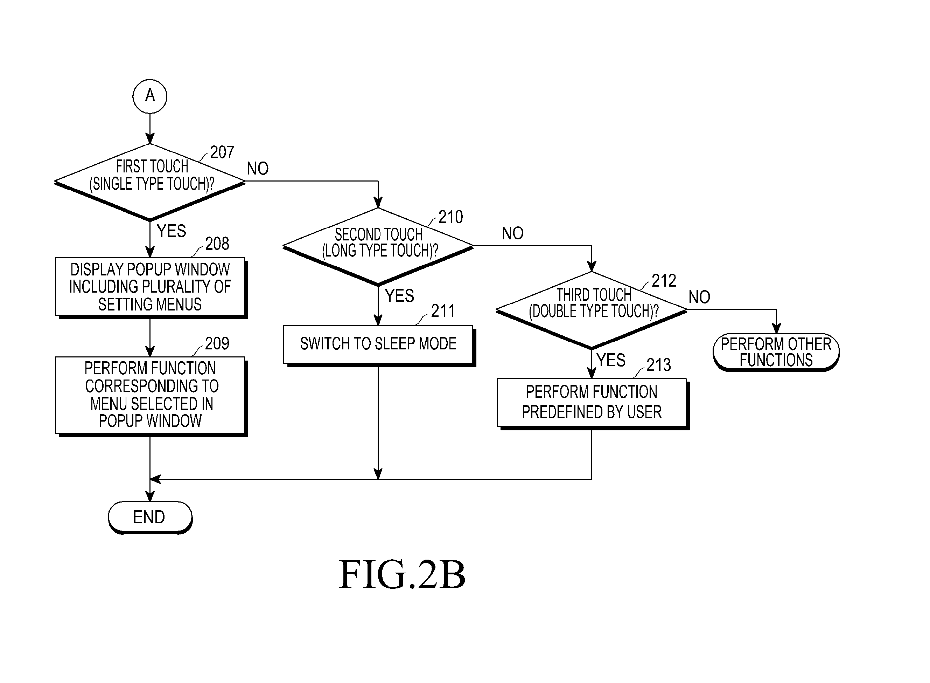

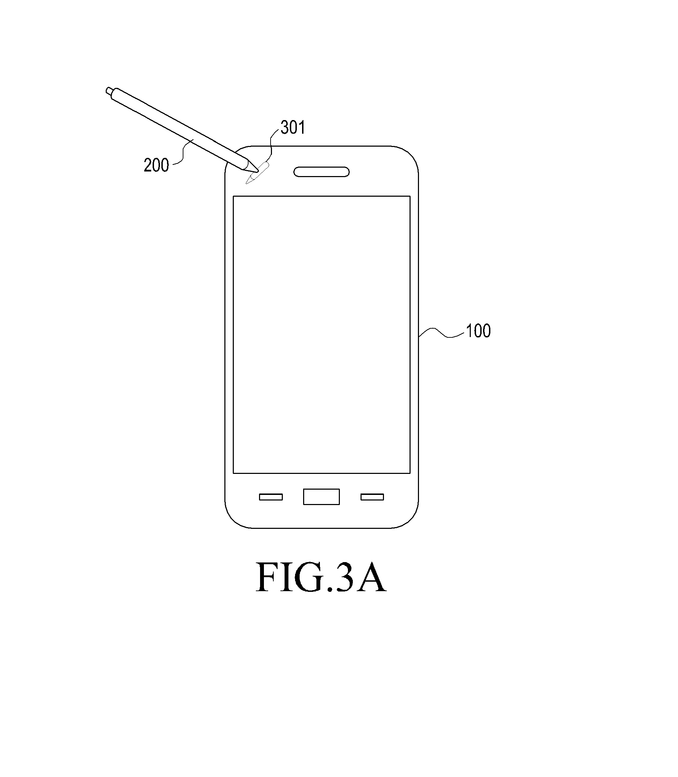

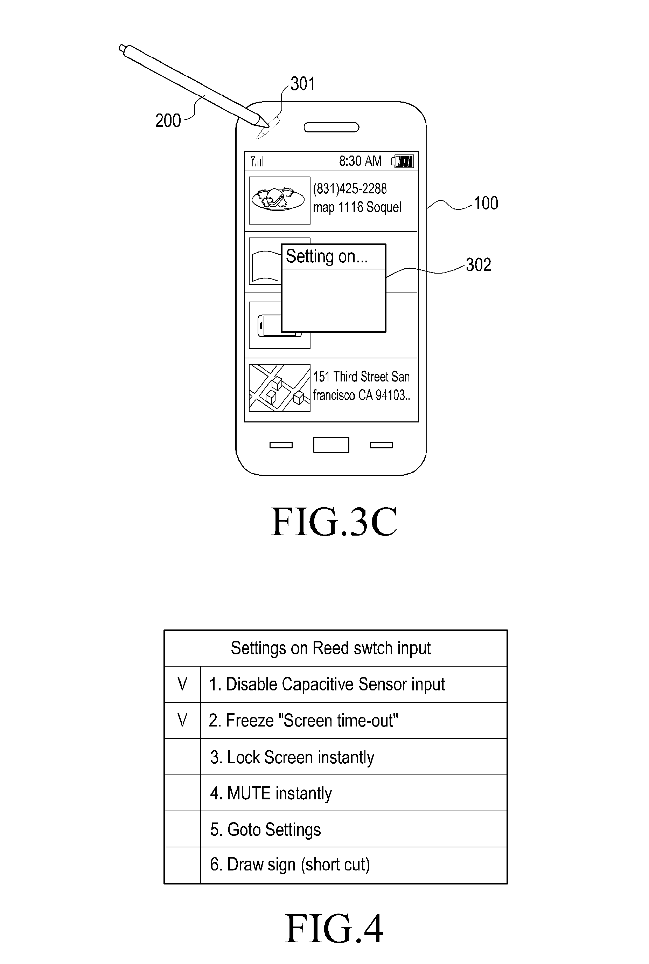

An operation of controlling mode switching in the above-described terminal will now be described in detail with reference to FIGs. 2 to 4. FIG. 2A to 2B illustrate flowcharts describing a method for controlling mode switching in a terminal according to an embodiment of the present disclosure. FIGs. 3A to 3C illustrate the method for controlling mode switch in a terminal according to one embodiment of the present disclosure, and FIG. 4 illustrates a plurality of setting menus contained in a popup window according to one embodiment of the present disclosure.

The mode switching control operation shown in FIGs. 2 to 4 will be described in detail below with reference to FIG. 1. The switch unit 170 outputs an ON signal to the controller 110, when a touch operation occurs by a stylus pen in the switch unit 170 mounted on either a front or a side of the terminal.

Upon receiving the ON signal from the switch unit 170, the controller 110 detects the touch operation of the stylus pen at step 201 and determines a current mode of the terminal at step 202.

If it is determined at step 203 that the current mode of the terminal is the sleep mode in which the screen is turned off, the controller 110 switches the terminal to the wake-up mode at step 204. If a password or a screen lock pattern of the terminal is set in advance by a user, the controller 110 can display a screen for inputting the user-set password or screen lock pattern, or can immediately switch to the wake-up mode after skipping the display of the screen.

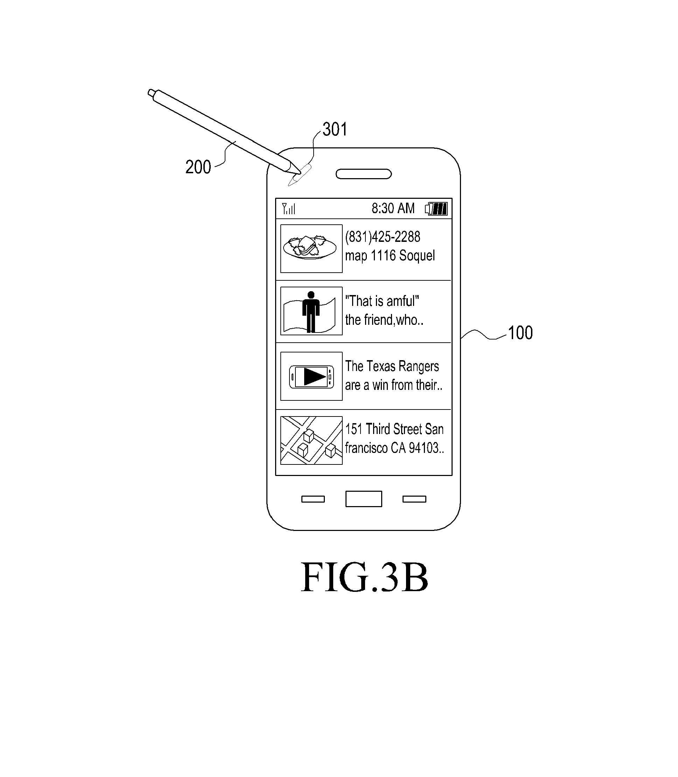

FIG. 3A illustrates a sleep mode in which the screen of the terminal 100 is turned off. As illustrated in FIG. 3A, an icon 301 for informing a user of an area on which a stylus pen 200 can touch, i.e., an area in which the switch unit 170 is mounted, can be displayed on the front of the terminal 100. Thus, when a user touches the icon 301 with the stylus pen 200, the terminal 100 can switch to the wake-up mode as illustrated in FIG. 3B.

If it is determined at step 205 that the current mode of the terminal is the wake-up mode in which the screen is turned on, the controller 110 determines a type of the signal received from the switch unit 170 at step 206.

When the terminal is in the wake-up mode, the controller 110 can perform a function corresponding to a touch operation such as a single touch, a double touch, or a long touch of the stylus pen, which occurs in the switch unit 170.

The switch unit 170 can output one ON signal to the controller 110 within a predetermined time in response to the single touch, output two ON signals to the controller 110 within a predetermined time in response to the double touch, and output a continuous ON signal to the controller 110 for equal to or longer than a predetermined time in response to the long touch.

Thus, the controller 110 can determine a type of the touch operation of a stylus pen, which occurred in the switch unit 170, according to a type of the signal received from the switch unit 170 during the wake-up mode.

If it is determined at step 207 that the touch operation of the stylus pen, which occurred in the switch unit 170, is the first type touch such as a single touch, the controller 110 displays a popup window containing a plurality of setting menus at step 208.

That is, if the icon 301 indicating the area, on which the stylus pen 200 can touch, is single-touched by the stylus pen 200 during the wake-up mode of the terminal 100 as illustrated in FIG. 3B, a popup window 302 containing a plurality of setting menus can be displayed on a screen as illustrated in FIG. 3C.

If one of the plurality of setting menus contained in the popup window 302 is selected by a user while the popup window 302 is displayed as shown in FIG. 3C, the controller 110 performs a function corresponding to the selected setting menu at step 209.

FIG. 4 illustrates a plurality of setting menus contained in the popup window 302. In FIG. 4, a "Disable Capacitive Sensor input" menu disables an input of the capacitive sensor panel among a plurality of sensor panels included in the TSP of the touch screen unit 160. Although only the menu for disabling an input of the capacitive sensor panel is illustrated in FIG. 4, menus for disabling other inputs from each of the plurality of sensor panels included in the TSP of the touch screen unit 160 can be provided.

Therefore, if the "Disable Capacitive Sensor input" menu is set, the controller 110 disables the capacitive sensor panel or ignores an output from the capacitive sensor panel. For example, assuming that the touch screen unit 160 of the terminal includes a capacitive sensor panel and an electromagnetic induction sensor panel and if an input of the capacitive sensor panel is disabled as the "Disable Capacitive Sensor input" menu is set, then the terminal can be used as a stylus pen-dedicated terminal because only the electromagnetic induction sensor panel is enabled.

A "Freeze Screen time-out" menu prohibits the terminal from being switched to the sleep mode. A "Lock Screen instantly" menu switches the terminal to the sleep mode. A "MUTE instantly" menu switches the terminal to the mute mode. A "Goto Setting" menu switches the terminal to a configuration setting mode in which configuration of the terminal can be set. A "Draw Sign (Short Cut)" menu switches the terminal to a mode corresponding to a signature pattern. In the "Draw Sign (Short Cut)" menu, the terminal can immediately switch to a mode corresponding to a signature which is predefined by a user, when the pattern of the signature is input. For example, when a heart shape is drawn on a screen with the "Draw Sign (Short Cut)" menu being selected, the terminal can immediately switch to the message mode which is corresponding to the heart shape.

A plurality of setting menus according to one embodiment of the present disclosure can be edited, changed or deleted by a user.

When the terminal is in the wake-up mode, the popup window containing the plurality of setting menus can be displayed anytime on a screen by the first type touch which occurs by the stylus pen in the switch unit 170 regardless of the terminal's function mode including call mode, message mode, Internet mode and the like.

If it is determined at step 210 that the touch operation of the stylus pen is the second type touch such as a long touch, the controller 110 switches the terminal to the sleep mode at step 211.

If it is determined at step 212 that the type of the touch operation of the stylus pen is the third type touch such as a double touch, the controller 110 performs a function predefined by a user at step 213.

In one embodiment, assuming that the terminal has been set in advance to switch to a message mode when the third type touch occurs in the switch unit 170 by the stylus pen while the terminal is in the wake-up mode, the terminal can immediately switch to the message mode upon occurrence of the third type touch or a double touch operation.

In another embodiment, assuming that the terminal has been set in advance to implement "Disable Capacitive Sensor input" menu from among a plurality of setting menus displayed in the popup window illustrated in FIG. 4, and if the third type touch occurs in the switch unit 170 by the stylus pen while the terminal is in the wake-up mode, the terminal can disable the capacitive sensor panel or ignore an output from the capacitive sensor panel upon occurrence of the third type touch or the double touch operation.

In another embodiment, during the wake-up mode in which the screen is turned on, the terminal can display the popup window containing types of a plurality of sensor panels included in the touch screen unit 160 without determining the type of touch upon receiving an ON signal from the switch unit 170. Thus, when at least one sensor panel is selected through the popup window, the terminal disables the at least one selected sensor panel or ignores an output from the at least one selected sensor panel.

The apparatus and method for controlling mode switching in a terminal according to the present disclosure can be embodied in a computer-readable recording medium with computer-readable codes. The computer-readable recording medium can include all kinds of recording devices storing computer-readable data. Examples of the computer-readable recording medium include Read-Only Memory (ROM), Random-Access Memory (RAM), optical discs, magnetic tapes, floppy disks, hard disks, and non-volatile memory, and can also include transmission of carrier waves such as transmission of the Internet. The computer-readable recording medium can be distributed over computer systems connected by the network, so that the computer-readable codes can be stored and executed in a distributed fashion.

As is apparent from the foregoing description, a mode switching control apparatus and method proposed by the present invention can allow a user to conveniently switch a mode of a terminal using a stylus pen, and can increase the usability of the stylus pen. In addition, the proposed mode switching control apparatus and method can allow a user to conveniently and quickly switch a mode of a terminal only with a stylus pen and a switch unit, and can also individually enable each sensor panel in a terminal having a touch screen unit including a plurality of sensor panels.

Although the present disclosure has been described with exemplary embodiments, various changes and modifications be suggested to one skilled in the art. It is intended that the present disclosure encompass such changes and modifications as fall within the scope of the appended claims.

## Claims

1. An apparatus for controlling mode switch in a terminal, comprising:
a switch unit configured to output a signal for switching a mode of the terminal in response to a touch operation of a stylus pen; and
a controller configured to switch the mode of the terminal in response to the signal output from the switch unit.

2. The apparatus of claim 1, wherein the controller switches the terminal to a wake-up mode when the switch unit outputs the signal in response to the touch operation of the stylus pen during a sleep mode of the terminal.

3. The apparatus of claim 1, wherein the controller displays a menu for disabling at least one of a plurality of sensor panels included in a touch screen unit when the switch unit outputs the signal in response to the touch operation of the stylus pen during a wake-up mode of the terminal.

4. The apparatus of claim 1, wherein the controller performs a function corresponding to a type of the signal output from the switch unit in response to the touch operation of the stylus pen during a wake-up mode of the terminal.

5. The apparatus of claim 4, wherein the controller displays a popup window containing a plurality of setting menus upon receiving a signal indicating occurrence of a first type touch from the switch unit,
switches to the sleep mode upon receiving a signal indicating occurrence of a second type touch from the switch unit.,
performs a function predefined by a user upon receiving a signal indicating occurrence of a third type touch from the switch unit.

6. The apparatus of claim 5, wherein each of the first to third type touches is any one of a single touch, a double touch, and a long touch.

7. The apparatus of claim 5, wherein the controller performs a function corresponding to a setting menu which is selected among the plurality of setting menus by a user.

8. The apparatus of claim 5, wherein the plurality of setting menus contained in the popup window include a menu for disabling at least one of the plurality of sensor panels included in a touch screen unit, a menu for prohibiting switching to the sleep mode, a menu for switching to the sleep mode, a menu for switching to a mute mode, a menu for switching to a configuration setting mode, and a shortcut menu for switching to a mode corresponding to a signature pattern.

9. The apparatus of claim 1, wherein the switch unit is a reed switch which is mounted on either a front or a side of the terminal.

10. A method for controlling mode switching in a terminal, comprising:
determining a type of a signal which a switch unit outputs in response to a touch operation of a stylus pen; and
switching a mode of the terminal according to the type of the signal.

11. The method of claim 10, wherein the switch unit is a reed switch which is mounted on either a front or a side of the terminal.

12. The method of claim 10, wherein the switching comprises:
determining a current mode of the terminal when the switch unit outputs the signal; and
switching the terminal to a wake-up mode if the current mode of the terminal is a sleep mode.

13. The method of claim 102, the method further comprising
displaying a menu for disabling at least one of a plurality of sensor panels included in a touch screen unit according to the type of the signal output from the switch unit, if a current mode of the terminal is a wake-up mode.

14. The method of claim 12, the method further comprising:
performing a function corresponding to the type of the signal output from the switch unit, if a current mode of the terminal is a wake-up mode.

15. The method of claim 14, wherein performing comprises:
displaying a popup window containing a plurality of setting menus upon receiving the signal indicating occurrence of a first type touch from the switch unit,
switching to a sleep mode upon receiving a signal indicating occurrence of a second type touch from the switch unit, and
performing a function predefined by a user upon receiving a signal indicating occurrence of a third type touch from the switch unit.

16. The method of claim 15, wherein each of the first to third type touches is any one of a single touch, a double touch, and a long touch.

17. The method of claim 15, wherein the displaying comprises performing a function corresponding to a setting menu which is selected among the plurality of setting menus by the user.

18. The method of claim 15, wherein the plurality of setting menus contained in the popup window include a menu for disabling at least one of the plurality of sensor panels included in a touch screen unit, a menu for prohibiting switching to the sleep mode, a menu for switching to the sleep mode, a menu for switching to a mute mode, a menu for switching to a configuration setting mode, and a shortcut menu for switching to a mode corresponding to a signature pattern.
